# EUROPÄISCHE PATENTSCHRIFT

(11) **EP 2 673 101 B1**
(45) Veröffentlichungstag und Bekanntmachung des Hinweises auf die Patenterteilung: **20.09.2017**
(21) Anmeldenummer: 12700105.5
(22) Anmeldetag: 09.01.2012
(51) Int. Cl.: B23D 51/04, B23D 51/00, B23D 49/00

(54) **STÜTZEINRICHTUNG FÜR EINE WERKZEUGMASCHINE**
SUPPORTING DEVICE FOR A MACHINE TOOL
DISPOSITIF DE SUPPORT POUR MACHINE-OUTIL

(30) Priorität: 09.02.2011 DE 102011003883
(43) Veröffentlichungstag der Anmeldung: 18.12.2013
(73) Patentinhaber: Robert Bosch GmbH, 70442 Stuttgart (DE)
(72) Erfinder: KOCSIS, Timea, H-3525 Miskolc (HU); KONCSIK, Tamas, H-3793 Sajoecseg (HU)
(86) Internationale Anmeldenummer: PCT/EP2012/050214
(87) Internationale Veröffentlichungsnummer: WO 2012/107253

(56) Entgegenhaltungen:
- WO-A2-2009/061749
- DE-A1- 3 912 227
- DE-A1- 4 429 408
- DE-U1- 8 507 971
- GB-A- 2 206 527
- US-A- 4 676 001
- US-A- 6 067 716
- US-A1- 2002 059 732

## Beschreibung

Die Erfindung bezieht sich auf eine Stützeinrichtung für eine Werkzeugmaschine.

### Stand der Technik

Bekannt sind motorisch angetriebene Handsägen, beispielsweise elektromotorisch angetriebene Fuchsschwanzsägen, bei denen das Sägeblatt eine lineare, oszillierende Arbeitsbewegung ausführt. Werden mit derartigen Handsägen dünne Zweige an Bäumen bzw. Sträucher geschnitten, tritt das Problem auf, dass die Zweige auf Grund ihrer Biegsamkeit unter der Kraft, welche die Sägezähne auf den durchzusägenden Zweig ausüben, zurückweichen, was ein Durchsägen erschwert oder sogar unmöglich macht. Zur Erhöhung des Widerstands müssen die Zweige manuell gehalten werden, was jedoch ein erhebliches Gefahrenpotenzial birgt.

Aus der DE 85 07 971 U ist eine Stützeinrichtung, gemäss dem Oberbegriff des Anspruchs 1, für eine Stichsäge bekannt, die ein Stützelement in Form eines Stützwinkels mit zwei winklig zueinander angeordneten Stützschenkeln aufweist. Das Stützelement ist über ein Drehgelenk schwenkbar am Gehäuse der Handwerkzeugmaschine gelagert, wobei sich das Drehgelenk an einem einteilig mit dem hinteren Stützschenkel ausgebildeten Flansch des Stützelementes befindet. Der vordere Schenkel des Stützelementes ist mit dem hinteren Schenkel verbunden und kann beim Einführen eines Astes oder Rohres in den winkligen Aufnahmebereich aufgedrückt werden.

Das Stützelement ist mit Backen versehen, die sich an die seitlichen Flanken des Sägeblattes der Stichsäge anlegen, wobei im Bereich der Backen ein Quersteg angeordnet ist. Die Backen liegen mit Reibung am Sägeblatt an.

Die WO 2009/061749 A2 zeigt eine Stützeinrichtung, welche schwenkbar am Gehäuse einer Handwerkzeugmaschine angeschlagen werden kann und zwei links und rechts eines Schneidblattes der Handwerkzeugmaschine angeordnete Stützwinkel aufweist.

Die US 6,067716 (D3) zeigt ein Stützelement, das als ein verhältnismäßig massiver Block ausgeführt ist, in den ein Schlitz für ein Sägeblatt eingebracht ist. Der Block wird an einer Seite in eine Aufnahmeeinrichtung am Gehäuse der Handwerkzeugmaschine eingeschoben, an der eine Nut mit Hinterschnitt gebildet ist, welche einen entsprechenden Hinterschnitt am Stützelement umgreift.

### Offenbarung der Erfindung

Der Erfindung liegt die Aufgabe zu Grunde, mit einfachen konstruktiven Maßnahmen eine Stützeinrichtung für eine Werkzeugmaschine zu schaffen, die es erlaubt, Objekte zu bearbeiten, welche der Arbeitsbewegung des Werkzeugs der Werkzeugmaschine nur einen geringen Widerstand entgegensetzen.

Diese Aufgabe wird erfindungsgemäß mit den Merkmalen des Anspruches 1 gelöst. Die Unteransprüche geben zweckmäßige Weiterbildungen an.

Die erfindungsgemäße Stützeinrichtung kann in Werkzeugmaschinen eingesetzt werden, insbesondere in Handwerkzeugmaschinen wie z.B. motorisch angetriebenen Handsägen und dient zur Abstützung eines von einem Werkzeug der Werkzeugmaschine zu bearbeitenden Gegenstandes bzw. Objekts. Um auch Gegenstände bzw. Objekte mit der erforderlichen Genauigkeit und Effizient bearbeiten zu können, die in Richtung der Arbeitsbewegung des Werkzeugs nur einen geringen Widerstand entgegensetzen, beispielsweise Zweige bzw. kleine Äste, weist die Stützeinrichtung ein Stützelement auf, das mit einem Aufnahmebereich zur Aufnahme des zu bearbeitenden Gegenstands versehen ist. Das Stützelement ist am Gehäuse der Werkzeugmaschine schwenkbar gelagert. Der Aufnahmebereich ist von einer Stützwand des Stützelementes begrenzt, an der der zu bearbeitende Gegenstand, welcher im Aufnahmebereich aufgenommen ist, anliegt. Die Stützwand ermöglicht eine Abstützung des Gegenstandes entgegengesetzt zur motorischen Arbeitsbewegung des Werkzeugs der Werkzeugmaschine.

Diese Stützeinrichtung ermöglicht es, beispielsweise Zweige in den Aufnahmebereich des Stützelementes aufzunehmen, wobei die Abstützung des Zweigs über die Stützwand des Stützelementes erfolgt. Die Stützwand nimmt die Stützkraft auf, welche als Reaktionskraft bei der Bearbeitung des Gegenstands bzw. Objekts als Reaktion auf die Arbeitsbewegung des Werkzeugs entsteht. Beispielsweise werden bei einer linearen Sägebewegung eines Sägeblatts durch den Kontakt der Sägezähne mit dem Gegenstand Stützkräfte entgegen der Sägebewegung erzeugt, welche von der Stützwand der Stützeinrichtung aufgenommen werden. Auf ein zusätzliches Halten bzw. Sichern des zu bearbeitenden Gegenstandes kann verzichtet werden.

Das Stützelement ist vorteilhafterweise als ein Stützwinkel ausgebildet, welcher zwei winklig zueinander ausgerichtete Stützschenkel aufweist, die den Aufnahmebereich begrenzen. In dem sich winklig öffnenden Aufnahmebereich können Objekte wie zum Beispiel Äste mit unterschiedlichem Durchmesser aufgenommen werden, wobei eine Abstützung gegen die motorische Arbeitsbewegung des Werkzeugs gegeben ist. Einer der Stützschenkel, vorzugsweise beide Stützschenkel bilden hierbei jeweils eine Stützwand, an der sich das zu bearbeitende Objekt abstützt.

Die Stützwand des Stützelementes nimmt mit der Achse bzw. Linie der Arbeitsbewegung des Werkzeugs einen Winkel ein, der vorteilhafterweise zwischen 90° und 120° liegt, insbesondere zwischen 95° und 110°. Im Falle des Stützwinkels mit den zwei winklig zueinander ausgerichteten Stützschenkeln können diese zueinander einen Winkel von 50° bis 70° einschließen, insbesondere einen Winkel zwischen 55° und 65°. Dieser Winkelbereich stellt zum einen sicher, dass ein ausreichend großer Aufnahmebereich zur Aufnahme unterschiedlich großer Objekte gegeben ist. Zum anderen ermöglicht der Winkel, den die Stützwand mit der Achse der Arbeitsbewegung des Werkzeugs einnimmt, einen sichere Abstützung und Aufnahme der Reaktionskräfte über die Stützwand. Der hintere Stützschenkel des Stützwinkels nimmt im maximal aufgeschwungenen Zustand - bei vollständig durchtrenntem Gegenstand - zweckmäßigerweise zumindest annähernd den gleichen Winkel mit der Achse bzw. Linie der Arbeitsbewegung des Werkzeugs ein wie der vordere Stützschenkel im Ausgangszustand, also vor dem Durchtrennen des Gegenstands. Des Weiteren ist es vorteilhaft, dass der maximale Schwenkwinkel, den das Stützelement ausführen kann, und der Winkel, den die beiden Stützschenkel zueinander einnehmen, zumindest annähernd gleich groß sind.

Des Weiteren ist es zweckmäßig, die Position der Achse, um die das Stützelement am Gehäuse schwenkbar gelagert ist, in Abhängigkeit des Durchmessers des zu bearbeitenden Gegenstandes näher oder weiter entfernt zum Werkzeug der Handwerkzeugmaschine zu positionieren. Bei größeren Durchmessern ist es vorteilhaft, dass die Achse sich näher am Werkzeug befindet, bei kleineren Durchmessern befindet sich dagegen die Achse weiter vom Werkzeug entfernt.

Die Achse des Stützelementes befindet sich beispielsweise in der Ausführung des Werkzeugs als Sägeblatt in einer Linie, die mit der Sägezahnlinie übereinstimmt oder mit der Sägezahnlinie einen kleinen Winkel von vorteilhaft kleiner 10°, insbesondere kleiner oder gleich 5° einnimmt.

Die schwenkbare Lagerung des Stützelementes am Gehäuse der Werkzeugmaschine erlaubt eine Relativschwenkbewegung des Stützelementes einschließlich des darin aufgenommenen Objektes gegenüber dem Werkzeug während der Objektbearbeitung. So kann beispielsweise im Falle eines eine lineare, oszillierende Sägebewegung ausführenden Sägeblatts das Stützelement einschließlich des darin aufgenommenen Objektes über die Schwenkbewegung über die Sägezahnlinie des Sägeblatts geführt werden, so dass das Objekt im Stützelement von den Sägezähnen durchtrennt wird. Mit dem Kontakt der Sägezähne am Objekt wirken hierbei Reaktionskräfte auf das Objekt, die von der Stützwand am Stützelement aufgenommen werden. Die Schwenkbewegung erfolgt senkrecht zur Arbeitsbewegung des Werkzeugs, also im Falle des Sägeblatts senkrecht zur Sägezahnlinie.

Vorteilhafterweise ist das Stützelement über ein Federelement in eine Ausgangsposition kraftbeaufschlagt, wobei es sich bei dem Federelement zweckmäßigerweise um eine Schenkel- bzw. Drehfeder handelt. Das Federelement übt eine Kraft bzw. ein Moment um den Schwenkpunkt des Stützelementes am Gehäuse der Werkzeugmaschine aus. Bei der Werkstückbearbeitung wird das Stützelement einschließlich des darin aufgenommenen, zu bearbeitenden Objektes gegen die Sägezähne verschwenkt, wobei die Schwenkbewegung entgegen der Kraft bzw. des Momentes des Federelementes erfolgt. Vorteilhafterweise ist das Federelement so dimensioniert, dass die Kraft in Höhe des Stützelementes, welche aufgebracht werden muss, um das Stützelement gegen das Federelement zu verschwenken, nur wenige Newton beträgt, insbesondere weniger als 10 N, beispielsweise 4 N. Diese Kraft wirkt somit auf das im Stützelement aufgenommene Objekt. Dies bedeutet, dass beispielsweise Zweige, welche im Stützelement aufgenommen sind, und durchtrennt werden sollen, lediglich diese Kraft aufnehmen müssen, die senkrecht zur Arbeitsbewegung des Werkzeuges gerichtet ist.

Gemäß weiterer zweckmäßiger Ausführung ist vorgesehen, dass das Stützelement an einem Trägerteil gehalten ist, das schwenkbar am Gehäuse der Werkzeugmaschine festlegbar ist. Das Trägerteil weist zwei Trägerschenkel auf, die fest mit dem Stützelement verbunden sind und gehäuseseitig an einem Befestigungselement schwenkbar gelagert sind, das lösbar mit dem Gehäuse verbunden werden kann. Die Trägerschenkel überbrücken die Distanz zwischen der Schwenkachse am Gehäuse und dem Aufnahmebereich im Stützelement. Das lösbar am Gehäuse festgelegte Befestigungselement, welches zugleich eine Schwenkachse für das Trägerteil aufweist, kann bedarfsweise am Gehäuse befestigt bzw. von diesem entfernt werden. Die Aufteilung in ein Befestigungselement, ein Trägerteil und ein Stützelement erlaubt eine flexible Anpassung an unterschiedliche Werkzeugmaschinengeometrien.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung einer elektromotorischen Handsäge, die als Werkzeug ein Sägeblatt aufweist, das eine lineare, oszillierende Sägebewegung ausübt, mit einer Stützeinrichtung zur Aufnahme eines zu bearbeitenden Objektes, wobei die Stützeinrichtung schwenkbar am Gehäuse der Werkzeugmaschine angeordnet ist,
- Fig. 2: die Handwerkzeugmaschine einschließlich Stützeinrichtung in Seitenansicht,
- Fig. 3: die Stützeinrichtung in perspektivischer Darstellung,
- Fig. 4: in Seitenansicht die Stützeinrichtung einschließlich Sägeblatt mit Winkelangaben für einen vorne liegenden Stützschenkel eines Stützwinkels der Stützeinrichtung,
- Fig. 5: eine Fig. 4 entsprechende Darstellung, mit einer Winkelangabe zwischen zwei Stützschenkeln des Stützwinkels,
- Fig. 6: eine Ausführungsvariante der Stützeinrichtung mit einem Stützwinkel, dessen Stützschenkel an der Innenseite eine Verzahnung aufweisen,
- Fig. 7: eine weitere Ausführungsvariante mit einer wellenförmigen Innenkontur der Stützschenkel,
- Fig. 8 bis 10: die Handwerkzeugmaschine in verschiedenen Stadien während der Objektbearbeitung,
- Fig. 11: die Stützeinrichtung in Seitenansicht mit einem Begrenzungselement an einem Stützschenkel zur Begrenzung der Schwenkbewegung,
- Fig. 12: die Stützeinrichtung aus Fig. 9 in einer Ansicht von vorne.

In den Figuren sind gleiche Bauteile mit gleichen Bezugszeichen versehen.

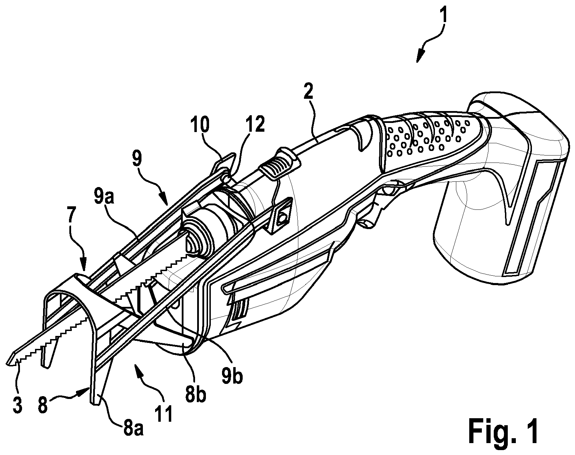

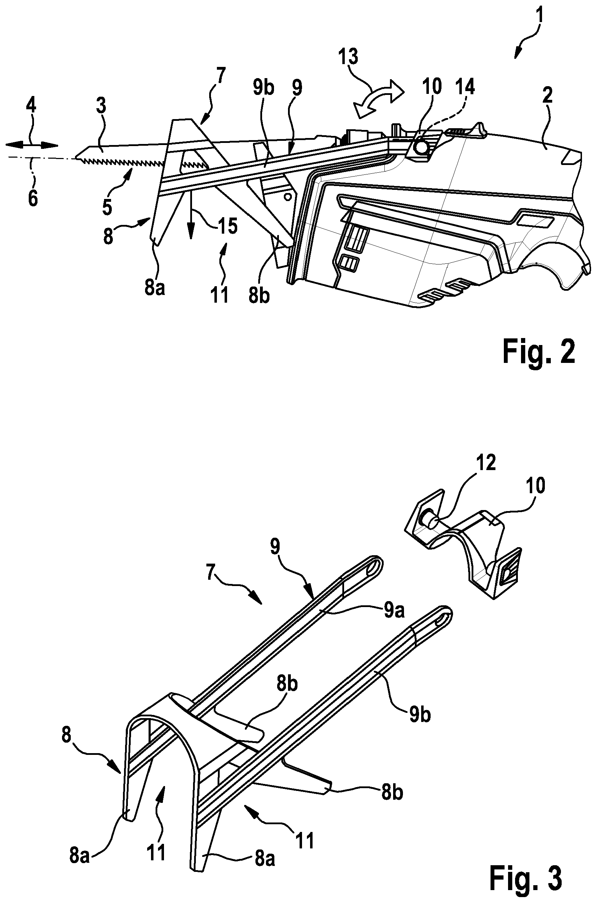

In den Figuren 1 und 2 ist eine als elektrische Fuchsschwanzsäge ausgeführte Handwerkzeugmaschine 1 dargestellt, die in einem Gehäuse 2 einen elektrischen Antriebsmotor zum Antreiben eines als Sägeblatt ausgeführten Werkzeugs 3 aufweist. Das Sägeblatt 3 übt, wie Fig. 2 zu entnehmen, eine oszillierende, lineare Arbeitsbewegung gemäß Doppelpfeil 4 aus, bei der die Sägezähne 5 des Sägeblatts 3, die in einer Sägezahnlinie 6 stehen, vor und zurück bewegt werden. Die Arbeitsbewegung 4 erfolgt entlang der Sägezahnlinie 6.

Wie den Figuren 1 und 2 weiter zu entnehmen, ist die Handwerkzeugmaschine 1 mit einer Stützeinrichtung 7 versehen, die ein Stützelement 8 an einem Trägerteil 9 sowie ein Befestigungselement 10 am Gehäuse 2 umfasst. Das Stützelement 8 ist als Stützwinkel ausgebildet und weist zwei winklig zueinander angeordnete Stützschenkel 8a und 8b auf, die sich nach außen hin öffnen und einen Aufnahmebereich 11 zur Aufnahme eines zu bearbeitenden Gegenstandes bzw. Objekts begrenzen. Das Stützelement 8 ist, wie der perspektivischen Darstellung gemäß Fig. 1 zu entnehmen, U-förmig ausgebildet, wobei jeder U-Schenkel zwei Stützschenkel 8a, 8b mit einem zwischenliegenden Aufnahmebereich 11 aufweist.

Das Trägerteil 9 umfasst zwei Trägerschenkel 9a, 9b, die jeweils an verschiedenen Seiten des U-förmigen Stützelementes 8 geführt und mit dem Stützelement fest verbunden sind. Auf der dem Stützelement 8 gegenüberliegenden Seite sind die Enden der beiden Trägerschenkel 9a, 9b schwenkbar mit dem Befestigungselement 10 verbunden, das lösbar am Gehäuse 2 der Handwerkzeugmaschine 1 angeordnet ist. Diese Ausführung ermöglicht es, die Stützeinrichtung 7 mit dem Stützelement 8 und dem Trägerteil 9 um die Achse 12 des Schwenkgelenks zwischen Befestigungselement 10 und den Trägerschenkeln 9a, 9b in Schwenkrichtung 13 (Fig. 2) zu verschwenken.

Wie Fig. 2 außerdem zu entnehmen, ist um die Achse 12 des Schwenkgelenks zwischen dem Befestigungselement 10 und den Trägerschenkeln 9a, 9b ein Federelement 14 in Form einer Schenkelfeder gelegt, die das Trägerteil 9 einschließlich Stützelement 8 in die in Fig. 2 dargestellte Ausgangsposition federbelastet. Das Federelement 14 generiert um die Achse 12 ein Moment, das in Höhe des Aufnahmebereichs 11 als ein Kraftpfeil 15 wirkt, welcher zumindest annähernd senkrecht zur Sägezahnlinie 6 des Sägeblatts 3 wirkt. Um das Stützelement 8 gegen die Kraft des Federelements 14 nach oben verschwenken zu können, muss eine Kraft entgegengesetzt zum Kraftpfeil 15 aufgewandt werden. Diese Kraft beträgt vorteilhafterweise weniger als 10 N, beispielsweise 4 N bis 9 N.

Wie der Einzeldarstellung der Stützeinrichtung 7 gemäß Fig. 3 zu entnehmen, weist das U-förmig ausgebildete Stützelement 8 jeweils zwei winkelförmige Aufnahmebereiche 11 auf, die zwischen Stützschenkeln 8a, 8b gebildet sind. Das Stützelement 8 ist U-förmig ausgebildet, wobei die Aufnahmebereiche 11 im montierten Zustand auf verschiedenen Seiten des Sägeblattes angeordnet sind. Je ein Paar Stützschenkel 8a, 8b mit zwischenliegendem Aufnahmebereich 11 ist mit einem Trägerschenkel 9a bzw. 9b des Trägerteils 9 verbunden.

Die Achse 12, um die die Trägerschenkel 9a, 9b verschwenkbar sind, ist als ein Achszapfen ausgebildet, der an dem Befestigungselement 10 angeordnet ist. Pro Trägerschenkel 9a, 9b ist ein Achszapfen am Befestigungselement 10 vorgesehen, wobei der Achszapfen 12 in zugeordnete Ausnehmungen benachbart zu den Stirnseiten der Trägerschenkel 9a, 9b einführbar ist.

Das Befestigungselement 10 ist lösbar am Gehäuse der Handwerkzeugmaschine zu befestigen. Die Befestigung erfolgt beispielsweise in rast- bzw. formschlüssiger Weise durch Aufklipsen des Befestigungselementes am Gehäuse oder in ähnlicher Weise.

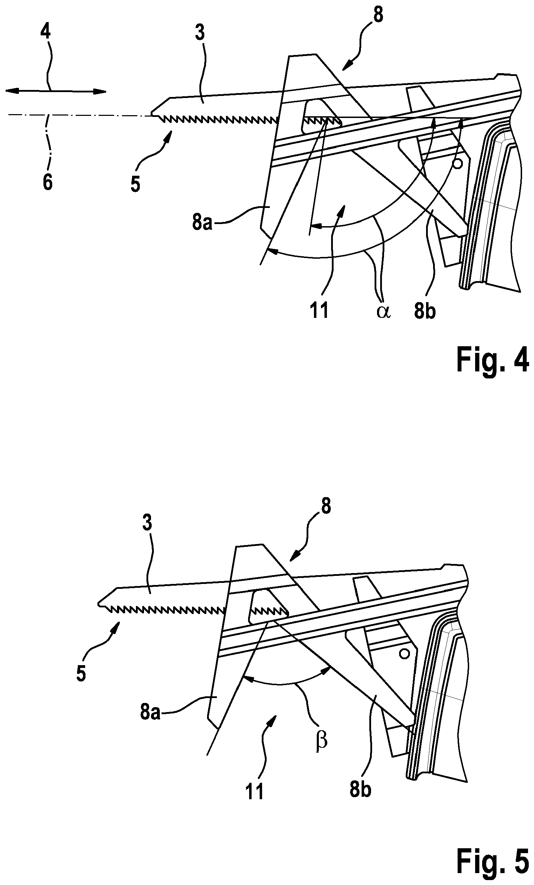

In Fig. 4 ist das Stützelement 8 mit eingetragenem Winkel α zwischen dem vorne liegenden Stützschenkel 8a, welcher der Spitze des Sägeblatts 3 zugewandt ist, und der Sägezahnlinie 6 dargestellt. Der Winkel α liegt in einem Winkelbereich zwischen 90° und 120°, wobei im Ausführungsbeispiel ein Ausführungsbeispiel zwischen 95° und 110° dargestellt ist. An der Innenseite des Stützschenkels 8a liegt das zu bearbeitende Objekt an, welches im Aufnahmeraum 11 aufgenommen ist. Bei einer Rückwärtsbewegung des Sägeblatts 3 bearbeiten die Sägezähne 5 das im Aufnahmeraum 11 aufgenommene Objekt, wobei gegen die Innenseite des vorne liegenden Stützschenkels 8a eine Gegenkraft wirkt.

Fig. 5 zeigt das Stützelement 8 am Sägeblatt 3 mit dem Winkel β zwischen den beiden Stützschenkeln 8a und 8b im Bereich des Aufnahmeraums 11. Der Winkel β gibt den Öffnungswinkel des Aufnahmeraums 11 an. Der Winkel β liegt in einem Wertebereich zwischen 50° und 70°, insbesondere zwischen 55° und 65°.

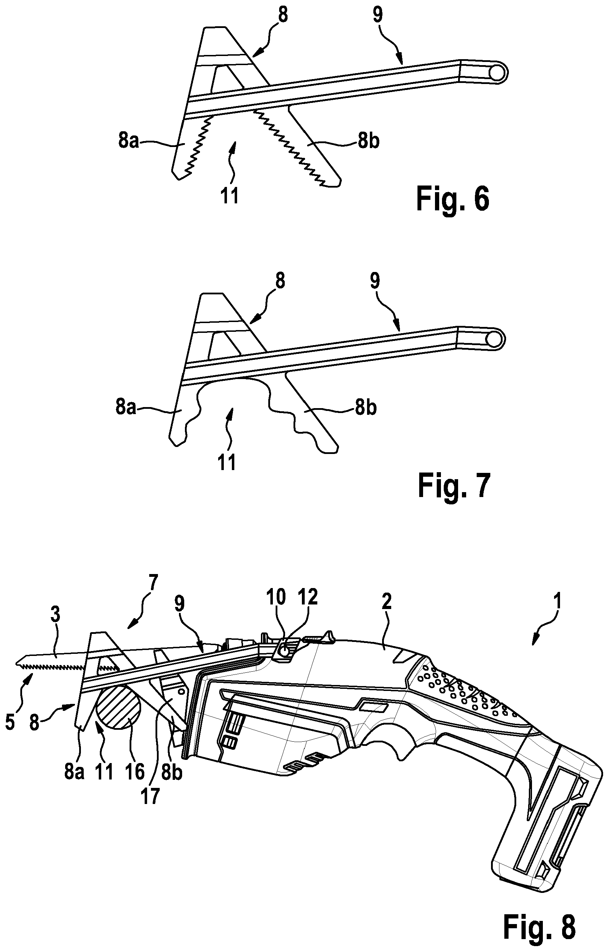

In den Figuren 6 und 7 sind weitere Ausführungsbeispiele für das Stützelement 8 am Trägerteil 9 dargestellt. Die Innenseiten der winklig ausgerichteten Stützschenkel 8a und 8b sind beim Ausführungsbeispiel gemäß den Figuren 1 bis 5 glattwandig ausgebildet, beim Ausführungsbeispiel gemäß Fig. 6 jedoch mit Zähnen versehen, welche in Richtung des spitzen Winkels des Aufnahmeraums 11 gerichtet sind, um ein Festhaken des aufgenommenen Objekts zu unterstützen. Gemäß Fig. 7 ist vorgesehen, dass die Innenseite der Stützschenkel 8a, 8b wellenförmig ausgebildet ist, was die Aufnahme unterschiedlich großer Objekte in bestimmten, diskreten Positionen erlaubt.

In den Figuren 8 bis 10 ist die Handwerkzeugmaschine 1 in verschiedenen Stadien während der Bearbeitung eines Gegenstands bzw. Objekts 16 dargestellt. Fig. 8 stellt den Ausgangszustand dar, in welchem sich die Stützeinrichtung 7 in ihrer Ausgangsposition befindet. Der Gegenstand 16 weist einen runden Querschnitt auf, es handelt sich beispielsweise um einen Ast bzw. einen Zweig. Der Gegenstand 16 erstreckt sich quer zur Ebene des Sägeblatts 3 und wird bei der Werkstückbearbeitung durch die Arbeitsbewegung des Sägeblatts von den Sägezähnen 5 durchtrennt. Der Gegenstand 16 ist im Aufnahmebereich 11 zwischen den winklig angeordneten Stützschenkeln 8a, 8b sicher aufgenommen und stützt sich während des Sägevorganges an den Innenseiten der Stützschenkel 8a, 8b ab. Auf Grund der Neigung der Sägezähne 5 entgegengesetzt zur Spitze des Sägeblattes wird insbesondere bei einer Rückwärtsbewegung des Sägeblattes in Richtung auf das Gehäuse 2 zu ein Sägeschnitt in den Gegenstand 16 eingebracht, hierbei wirkt eine Reaktions- bzw. Stützkraft auf die Innenseite des vorderen Stützschenkels 8a.

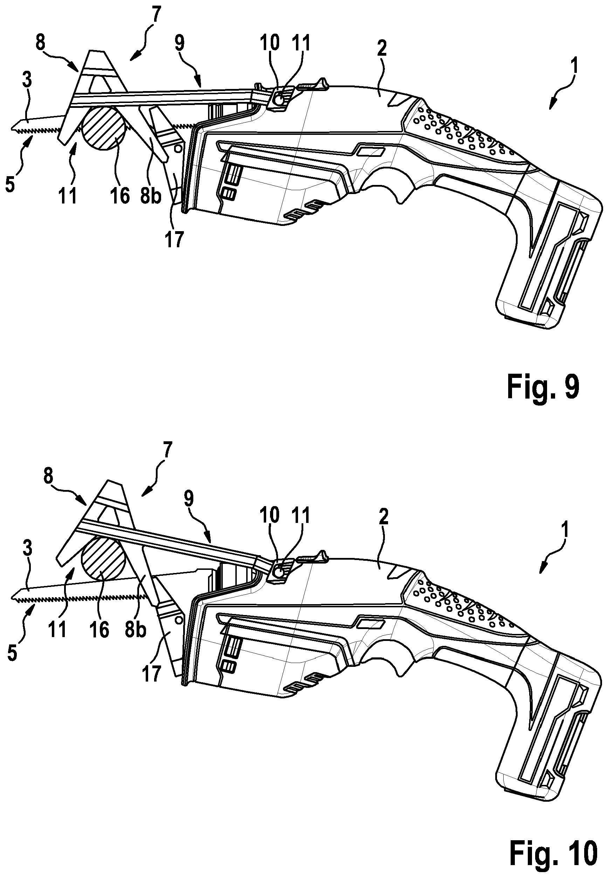

Fig. 9 zeigt den Bearbeitungszustand mit dem Sägeblatt 3 etwa im halbdurchsägten Zustand des Gegenstandes 16. Durch die Schwenkbeweglichkeit der Stützeinrichtung 7 um die Schwenkachse 11 ändert sich bei der Werkstückbearbeitung der Relativwinkel zwischen dem Stützelement 8 einschließlich des darin aufgenommenen Gegenstandes 16 und dem Sägeblatt 3. Nachdem der Gegenstand 16 vollständig durchtrennt wurde (Fig. 10), kann die Stützeinrichtung 7 wie mit dem Pfeil in Fig. 10 dargestellt durch die Wirkung des Federelementes wieder in ihre Ausgangsposition zurück verschwenken.

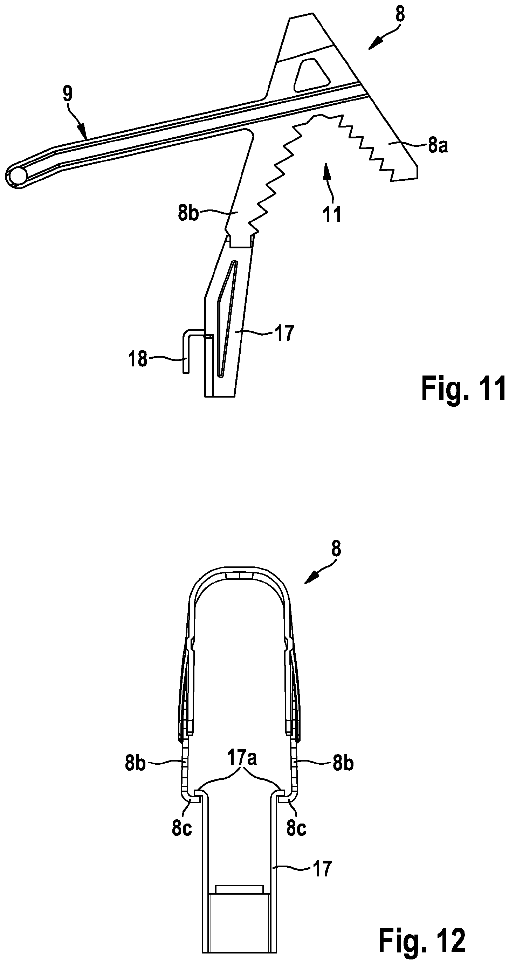

In dem in den Fig. 11 und 12 dargestellten Ausführungsbeispiel ist das Stützelement 8 ebenfalls als Stützwinkel ausgebildet und weist die zwei winklig zueinander angeordneten Stützschenkel 8a und 8b auf, die den zwischenliegenden, winkelförmigen Aufnahmebereich 11 zur Aufnahme des zu bearbeitenden Gegenstands begrenzen. Der Aufbau des Stützelementes 8 sowie des Trägerteils 9 entspricht demjenigen aus Fig. 6.

Zur Begrenzung der Ausschwenkbewegung ist ein Begrenzungselement 17 vorgesehen, das gehäusefest bzw. an einer Fußplatte der Handwerkzeugmaschine befestigbar ist. Das Begrenzungselement 17 weist, wie Fig. 12 zu entnehmen, zwei seitliche Begrenzungswände auf, deren stirnseitige Enden 17a nach außen umgebogen sind und von korrespondierenden, stirnseitigen Enden 8c, die nach innen gebogen sind und sich an der Stirnseite der hinteren Stützschenkel 8b befinden, formschlüssig hintergriffen sind. In Fig. 12 ist der maximal aufschwenkte Zustand der Stützeinrichtung dargestellt, in welchem die Enden 17a des Begrenzungselementes 17 auf Kontakt bzw. Anschlag zu den korrespondierenden Enden 8c der hinteren Stützschenkel 8b liegen. Die Enden 8c der Stützschenkel 8b können bis zum Erreichen des Anschlags an der Außenseite der Begrenzungswände des Begrenzungselementes 17 während der Schwenkbewegung entlang verfahren, so dass die Aufschwenkbewegung des Stützelementes 8 bis zum Erreichen des oberen Anschlags nicht durch das Begrenzungselement 17 behindert ist.

Wie Fig. 11 auch zu entnehmen, ist am Begrenzungselement 17 ein Haken 18 angeformt, der zur lösbaren Befestigung des Begrenzungselementes 17 in einer korrespondierenden Aufnahme an der Fußplatte bzw. am Gehäuse der Handwerkzeugmaschine dient.

Das Begrenzungselement 17 ist auch in den Fig. 8 bis 10 dargestellt.

## Patentansprüche

1. Stützeinrichtung für eine Werkzeugmaschine, insbesondere eine Handwerkzeugmaschine (1), zur Abstützung eines von einem Werkzeug (3) der Werkzeugmaschine (1) zu bearbeitenden Gegenstands (16), mit einem am Gehäuse (2) der Werkzeugmaschine (1) schwenkbar lagerbaren Stützelement (8), das einen Aufnahmebereich (11) zur Aufnahme des Gegenstands (16) aufweist, wobei der Aufnahmebereich (11) von einer Stützwand begrenzt ist, an der sich der im Aufnahmebereich (11) aufgenommene Gegenstand (16) gegen die motorische Arbeitsbewegung des Werkzeugs (3) abstützt, **dadurch gekennzeichnet, dass** das Stützelement (8) als ein U-förmiger Stützwinkel ausgebildet ist, wobei jeder U-Schenkel zwei winklig zueinander ausgerichtete Stützschenkel (8a, 8b) aufweist, die sich nach außen hin öffnen und den zwischenliegenden Aufnahmebereich (11) aufweisen, dass das Stützelement (8) an einem Trägerteil (9) gehalten ist, das schwenkbar am Gehäuse (2) der Werkzeugmaschine (1) festlegbar ist, dass das Trägerteil (9) zwei Trägerschenkel (9a, 9b) aufweist, die fest mit dem Stützelement (8) verbunden sind, wobei je ein Paar Stützschenkel (8a, 8b) mit einem Trägerschenkel (9a, 9b) des Trägerteils (9) verbunden ist.

2. Stützeinrichtung nach Anspruch 1, **dadurch gekennzeichnet, dass** das Stützelement (8) als Stützwinkel mit zwei winklig zueinander ausgerichteten Stützschenkeln (8a, 8b) ausgebildet sind, zwischen denen der Aufnahmebereich (11) liegt.

3. Stützeinrichtung nach Anspruch 2, **dadurch gekennzeichnet, dass** der Winkel (β) zwischen den Stützschenkeln (8a, 8b) zwischen 50° und 70° liegt, insbesondere zwischen 55° und 65°.

4. Stützeinrichtung nach einem der Ansprüche 1 bis 3, **dadurch gekennzeichnet, dass** die Stützwand des Stützelements (8) mit der Achse (12) der motorischen Arbeitsbewegung des Werkzeugs (3) einen Winkel (α) einschließt, der zwischen 90° und 120° liegt, insbesondere zwischen 95° und 110°.

5. Stützeinrichtung nach einem der Ansprüche 1 bis 4, **dadurch gekennzeichnet, dass** das Stützelement (8) über ein Federelement (14) in eine Ausgangsposition kraftbeaufschlagt ist.

6. Stützeinrichtung nach Anspruch 5, **dadurch gekennzeichnet, dass** das Federelement (14) als Schenkel- bzw. Drehfeder ausgebildet ist.

7. Stützeinrichtung nach Anspruch 6, **dadurch gekennzeichnet, dass** die von dem Federelement (14) erzeugte Federkraft kleiner als 10 N ist, insbesondere zwischen 4 N und 9 N beträgt.

8. Stützeinrichtung nach einem der Ansprüche 1 bis 7, **dadurch gekennzeichnet, dass** das Trägerteil (9) an einem Befestigungselement (10) schwenkbar gelagert ist, das lösbar mit dem Gehäuse (2) zu verbinden ist.

9. Stützeinrichtung nach einem der Ansprüche 1 bis 8, **dadurch gekennzeichnet, dass** zur Begrenzung der Schwenkbewegung des Stützelements (8) ein Begrenzungselement (17) vorgesehen ist, das am Gehäuse (2) bzw. einer Fußplatte der Werkzeugmaschine angeordnet ist.

10. Stützeinrichtung nach Anspruch 9, **dadurch gekennzeichnet, dass** das Begrenzungselement (17) einen Endanschlag für die Schwenkbewegung des Stützelements (8) bildet.

11. Stützeinrichtung nach Anspruch 10, **dadurch gekennzeichnet, dass** das Begrenzungselement (17) Begrenzungswände mit umgebogenen Enden (17a) aufweist, die umgebogene Enden (8c) am Stützelement (8) hintergreifen.

12. Werkzeugmaschine, insbesondere Handwerkzeugmaschine, vorzugsweise motorisch angetriebene Handsäge, mit einer Stützeinrichtung (7) nach einem der Ansprüche 1 bis 11.

## Claims

1. Supporting device for a power tool, in particular a portable power tool (1), for supporting an article (16) to be machined by a tool (3) of the power tool (1), having a supporting element (8) which is mountable in a pivotable manner on the housing (2) of the power tool (1) and has a receiving region (11) for receiving the article (16), wherein the receiving region (11) is bounded by a supporting wall by way of which the article (16) that is received in the receiving region (11) is supported against the motorized working movement of the tool (3), **characterized in that** the supporting element (8) is configured as a U-shaped supporting bracket, wherein each U-leg has two supporting legs (8a, 8b) that are oriented at an angle to one another and open outwards and have the receiving region (11) in between, **in that** the supporting element (8) is held on a carrier part (9) which is able to be secured in a pivotable manner to the housing (2) of the power tool (1), **in that** the carrier part (9) has two carrier legs (9a, 9b) which are firmly connected to the supporting element (8), wherein in each case one pair of supporting legs (8a, 8b) is connected to a carrier leg (9a, 9b) of the carrier part (9).

2. Supporting device according to Claim 1, **characterized in that** the supporting element (8) is configured as a supporting bracket having two supporting legs (8a, 8b) which are oriented at an angle to one another and between which the receiving region (11) is located.

3. Supporting device according to Claim 2, **characterized in that** the angle (β) between the supporting legs (8a, 8b) is between 50° and 70°, in particular between 55° and 65°.

4. Supporting device according to one of Claims 1 to 3, **characterized in that** the supporting wall of the supporting element (8) encloses an angle (α) of between 90° and 120°, in particular between 95° and 110° with the axis (12) of the motorized working movement of the tool (3).

5. Supporting device according to one of Claims 1 to 4, **characterized in that** the supporting element (8) is forced into a starting position via a spring element (14).

6. Supporting device according to Claim 5, **characterized in that** the spring element (14) is configured as a leg spring or torsion spring.

7. Supporting device according to Claim 6, **characterized in that** the spring force generated by the spring element (14) is less than 10 N, in particular between 4 N and 9 N.

8. Supporting device according to one of Claims 1 to 7, **characterized in that** the carrier part (9) is mounted in a pivotable manner on a fastening element (10) which is to be connected releasably to the housing (2).

9. Supporting device according to one of Claims 1 to 8, **characterized in that**, in order to limit the pivoting movement of the supporting element (8), a limiting element (17) is provided which is arranged on the housing (2) or on a base plate of the power tool.

10. Supporting device according to Claim 9, **characterized in that** the limiting element (17) forms an end stop for the pivoting movement of the supporting element (8).

11. Supporting device according to Claim 10, **characterized in that** the limiting element (17) has limiting walls with bent ends (17a) which engage behind bent ends (8c) on the supporting element (8).

12. Power tool, in particular portable power tool, preferably motor-driven handsaw, having a supporting device (7) according to one of Claims 1 to 11.

## Revendications

1. Dispositif de support pour une machine-outil, notamment une machine-outil manuelle (1) pour soutenir un objet (16) à usiner par un outil (3) de la machine-outil (1), avec un élément de support (8) pouvant être positionné de manière pivotante sur le logement (2) de la machine-outil (1), qui présente une zone de réceptacle (11) pour recevoir l'objet (16), dans lequel la zone de réceptacle (11) est délimitée par une paroi d'appui, sur laquelle l'objet (16) reçu dans la zone de réceptacle (11) s'appuie en sens inverse du mouvement de travail motorisé de l'outil (3), **caractérisé en ce que** l'élément de support (8) est conçu comme une équerre de support en forme de U, dans lequel chaque pan de U présente deux pans de support (8a,8b) alignés en formant un angle l'un par rapport à l'autre, qui s'ouvrent vers l'intérieur et présentent la zone de réceptacle (11), **en ce que** l'élément de support (8) est maintenu sur une partie porteuse (9), qui peut être immobilisée par pivotement sur le logement (2) de la machine-outil (1), **en ce que** la partie porteuse (9) présente deux pans porteurs (9a,9b), qui sont reliés solidement à l'élément de support (8), dans lequel une paire respective de pans de support (8a,8b) est reliée avec un pan porteur (9a,9b) de la partie porteuse (9).

2. Dispositif de support selon la revendication 1, **caractérisé en ce que** l'élément de support (8) est conçu comme une équerre de support avec deux pans de support (8a,8b) alignés en formant un angle droit l'un par rapport à l'autre, entre lesquels est située la zone de réceptacle (11).

3. Dispositif de support selon la revendication 2, **caractérisé en ce que** l'angle (β) est situé entre les pans de support (8a,8b) entre 50° et 70°, notamment entre 55° et 65°.

4. Dispositif de support selon une des revendications 1 à 3, **caractérisé en ce que** la paroi d'appui de l'élément de support (8) définit avec l'axe (12) du mouvement de travail motorisé de l'outil (3) un angle (α), qui est compris entre 90° et 120°, notamment 95° et 110°.

5. Dispositif de support selon une des revendications 1 à 4, **caractérisé en ce que** l'élément de support (8) est sollicitée avec une force par un élément de ressort (14) dans une position de départ.

6. Dispositif de support selon la revendication 5, **caractérisé en ce que** l'élément de ressort (14) est conçu comme un ressort à branches, respectivement un ressort de torsion.

7. Dispositif de support selon la revendication 6, **caractérisé en ce que** la force de ressort générée par l'élément de ressort (14) est plus petite que 10 N, notamment est comprise entre 4 N et 9 N.

8. Dispositif de support selon une des revendications 1 à 7, **caractérisé en ce que** la partie porteuse (9) est positionnée par pivotement sur un élément de fixation (10), qui peut être relié de manière amovible (2).

9. Dispositif de support selon une des revendications 1 à 8, **caractérisé en ce que** pour limiter le mouvement de pivotement de l'élément de support (8), un élément de limitation (17) est prévu, qui est disposé sur le logement (2), respectivement sur une plaque de pied de la machine-outil.

10. Dispositif de support selon la revendication 9, **caractérisé en ce que** l'élément de limitation (17) forme une butée d'extrémité pour le mouvement pivotant de l'élément de support (8).

11. Dispositif de support selon la revendication 10, **caractérisé en ce que** l'élément de limitation (17) présente des parois de limitation avec des extrémités recourbées (17a), qui viennent en prise par l'arrière avec les extrémités recourbées (8c) sur l'élément de support (8).

12. Machine-outil, notamment machine-outil manuelle, de préférence une scie manuelle entraînée de manière motorisée, avec un dispositif de support (7) selon une des revendications 1 à 11.
